# EUROPEAN PATENT SPECIFICATION

(11) **EP 2 937 394 B1**
(45) Date of publication and mention of the grant of the patent: **05.02.2020**
(21) Application number: 13866228.3
(22) Date of filing: 18.12.2013
(51) Int. Cl.: C09J 121/02, C09J 7/00, C09J 107/02, C09J 125/08, C09J 133/02, D21H 27/32

(54) **PRESSURE-SENSITIVE ADHESIVE COMPOSITION, PRESSURE-SENSITIVE ADHESIVE, AND INFORMATION-CARRYING SHEET COATED WITH PRESSURE-SENSITIVE ADHESIVE**
HAFTKLEBERZUSAMMENSETZUNG, HAFTKLEBER UND INFORMATIONSTRÄGERFOLIE MIT DARAUF AUFGEBRACHTEM HAFTKLEBER
COMPOSITION D'AGENT ADHÉSIF AUTOCOLLANT, AGENT ADHÉSIF AUTOCOLLANT, ET FEUILLE DE SUPPORT D'INFORMATIONS COMPORTANT UN AGENT ADHÉSIF AUTOCOLLANT APPLIQUÉ SUR CELLE-CI

(30) Priority: 18.12.2012 JP 2012275200; 18.12.2012 JP 2012275201
(43) Date of publication of application: 28.10.2015
(73) Proprietor: Tokyo Printing Ink Mfg. Co., Ltd., Kita-ku Tokyo 114-0002 (JP)
(72) Inventor: TANAZAWA Noritaka, Saitama-shi Saitama 331-0811 (JP); OHNO Naotaka, Saitama-shi Saitama 331-0811 (JP); OHYAMA Teruhiko, Saitama-shi Saitama 331-0811 (JP)
(74) Representative: Schollweck, Susanne
(86) International application number: PCT/JP2013/083846
(87) International publication number: WO 2014/098109

(56) References cited:
- EP-A1- 2 083 057
- JP-A- H 101 654
- JP-A- H10 130 605
- JP-A- H11 181 381
- JP-A- 2000 033 788
- JP-A- 2005 314 448

## Description

### TECHNICAL FIELD

The present invention relates to a pressure-sensitive adhesive composition, a pressure-sensitive adhesive, and an information-carrying sheet for which the composition and the adhesive are used and, particularly, to a pressure-sensitive adhesive composition and a pressure-sensitive adhesive that is applied to a sheet after printing and an information-carrying sheet for which the composition and the adhesive are used.

### BACKGROUND ART

In recent years, banks, credit card companies, public offices, and the like have used "confidential postcards" as means for notifying personal deposit states, balance information, pension information, and the like to individuals. Blanks that are used for the confidential postcards are configured to have an information-written surface coated with a pressure-sensitive adhesive so that, in a case in which only one surface is coated with the pressure-sensitive adhesive, adhesion is not possible with a low pressure; however, in a case in which surfaces coated with the pressure-sensitive adhesive are press-adhered together with a certain pressure or higher, a significantly high re-detachment strength is developed.

As the above-described pressure-sensitive adhesive, pressure-sensitive adhesives that are applied before confidential personal information and the like are printed on a blank, that is, coating and printing-type adhesives (also simply called pre-coating-type adhesives) have thus far been known and used. For example, Patent Document 1 discloses a pressure-sensitive adhesive containing an adhesive base obtained by mixing a rubber latex and a protective colloid-based acryl copolymer emulsion and a filler as main components as the pre-coating-type cold seal adhesive (pressure-sensitive adhesive) that is used in three-fold postcards.

Recently, the above-described confidential postcards have also been used for direct mail and the like and there has been a demand for increasing the amount of information that is printed using color printing. When the amount of information to be printed is increased as described above, in the pressure-sensitive adhesives that are applied before printing is carried out thereon, that is, the pre-coating-type adhesives, the adhesive-applied area is decreased as much as the printed area and thus the printing ink surface having different adhesion characteristics increases. As a result, the adhesion strength decreases as a whole and the printing area also differs depending on use and thus adhesion force is likely to become uneven. The above-described uneven adhesion force has a high possibility of causing problems in terms of the detachment of the printed surface during detachment or the leakage of personal information and the like due to detachment during transportation.

Therefore, Patent Document 2 discloses a pressure-sensitive adhesive in which a denatured rubber latex and a resin emulsion are blended together and which is applied after printing (also called post-coating-type adhesive) and a printed substance coated with the adhesive has a transparent adhesive layer and has a stable adhesion force with respect to the printing sheet surface. However, in Patent Document 2, since the resin emulsion is used, in a case in which the adhesive is applied in a printing machine such as a gravure printer or a flexo printer, plate clogging is likely to occur. In the case of a roll coater, there is no concern of plate clogging, but only one-color coating is available.

### RELATED DOCUMENT

### PATENT DOCUMENT

[Patent Document 1] Japanese Unexamined Patent Publication No. 5-295335
[Patent Document 2] Japanese Unexamined Patent Publication No. 10-130605

### DISCLOSURE OF THE INVENTION

Therefore, an object of the present invention is to provide a pressure-sensitive adhesive composition and a pressure-sensitive adhesive which are post-coating-type adhesives that are used for information-carrying sheets such as confidential postcards and do not easily cause plate clogging even in a case in which the adhesives are applied using a printing machine such as a gravure printer or a flexo printer, and an information-carrying sheet coated with the pressure-sensitive adhesive.

As a result of thorough studies, the present inventors found that, when a rubber latex and a water-soluble styrene-acryl copolymer are used, the above-described problems can be solved and completed the present invention.

According to the present invention, there is provided a pressure-sensitive adhesive composition for forming a re-detachable sheet by being applied to a first sheet surface and a second sheet surface after printing, being dried, and then press-bonding the first sheet surface and the second sheet surface together so as to closely adhere the first sheet surface and the second sheet surface, including a rubber latex and a water-soluble styrene-acrylic acid copolymer.

The pressure-sensitive adhesive composition of the present invention includes a rubber latex and a water-soluble styrene-acrylic acid copolymer. That is, the pressure-sensitive adhesive composition of the present invention includes a rubber latex containing fine rubber particles dispersed in an aqueous medium and a water-soluble styrene-acrylic acid copolymer. The water-soluble styrene-acrylic acid copolymer is attached to the surfaces of the fine rubber particles in the aqueous medium or is dissolved in the aqueous medium.

According to the present invention, it is possible to obtain a pressure-sensitive adhesive composition having excellent storage stability using the water-soluble styrene-acrylic acid copolymer. The reason therefor is not clear, but is considered that the attachment of the water-soluble styrene-acrylic acid copolymer to the surfaces of the fine rubber particles in the rubber latex and the dissolution of the water-soluble styrene-acrylic acid copolymer in the aqueous medium in the rubber latex stabilize the rubber latex. Meanwhile, in adhesive compositions including a rubber latex and a resin emulsion as described in Patent Documents 1 and 2, the resin in the resin emulsion is neither attached to the surfaces of fine rubber particles in the rubber latex nor dissolved in a water-soluble medium in the rubber latex. Therefore, the adhesive compositions do not have any action of stabilizing the rubber latex.

In addition, according to the present invention, there is provided a pressure-sensitive adhesive that forms a re-detachable sheet by being applied to a first sheet surface and a second sheet surface after printing and press-bonding the first sheet surface and the second sheet surface together so as to closely adhere the first sheet surface and the second sheet surface, including fine rubber particles and a water-soluble styrene-acrylic acid copolymer.

The pressure-sensitive adhesive of the present invention is obtained by applying and drying the pressure-sensitive adhesive composition on a substance to be coated such as paper and includes fine rubber particles and a water-soluble styrene-acrylic acid copolymer. As described above, in the pressure-sensitive adhesive composition of the present invention, the fine rubber particles are stabilized by the attachment of the water-soluble styrene-acrylic acid copolymer to the surfaces of the fine rubber particles. Therefore, the pressure-sensitive adhesive obtained by drying the pressure-sensitive adhesive composition has a homogeneous surface and has excellent balance between blocking resistance and re-detachability.

In addition, in the present invention, since the water-soluble styrene-acrylic acid copolymer is used, compared with a case in which an acryl-based resin emulsion is used as described in Patent Document 2, plate clogging does not easily occur when the adhesive is applied using a printing machine such as a gravure printer.

In addition, according to the present invention, there is provided an information-carrying sheet in which the pressure-sensitive adhesive is applied to a superposition surface of paper that serves as a base material.

The pressure-sensitive adhesive of the present invention has excellent storage stability while maintaining basic performance as a pressure-sensitive adhesive that is used for information-carrying sheets which can be adhered only when a certain pressure or higher is applied and allow adhesion surfaces to be detached without breaking paper that is a base material with a finger force and does not cause plate clogging when being applied using a printing machine. Since the pressure-sensitive adhesive is an aqueous adhesive, the influence on human bodies or environments by organic solvents is small.

In addition, the information-carrying sheet obtained through coating has a transparent coating surface and allows printed surfaces below to appear clear and unchanged in terms of color, thereby becoming a printed substance having excellent designability.

### DESCRIPTION OF EMBODIMENTS

Hereinafter, an embodiment for carrying out the present invention will be described in detail. The present embodiment is simply an embodiment for carrying out the present invention and the present invention is not limited to the present embodiment and can be carried out in a variety of different manners within the scope of the gist of the present invention.

A pressure-sensitive adhesive composition of the present invention is a pressure-sensitive adhesive composition for forming a re-detachable sheet by being applied to a first sheet surface and a second sheet surface after printing, being dried, and then press-bonding the first sheet surface and the second sheet surface together so as to closely adhere the first sheet surface and the second sheet surface, including a rubber latex and a water-soluble styrene-acrylic acid copolymer.

In addition, a pressure-sensitive adhesive of the present invention is a pressure-sensitive adhesive for forming a re-detachable sheet by being applied to a first sheet surface and a second sheet surface after printing and press-bonding the first sheet surface and the second sheet surface together so as to closely adhere the first sheet surface and the second sheet surface, including fine rubber particles and a water-soluble styrene-acrylic acid copolymer. In other words, the pressure-sensitive adhesive of the present invention refers to an adhesive obtained by applying and drying the pressure-sensitive adhesive composition of the present invention on a substance to be coated such as paper. Therefore, individual components included in the pressure-sensitive adhesive correspond to individual components included in the pressure-sensitive adhesive composition. The fine rubber particles included in the pressure-sensitive adhesive correspond to fine rubber particles included in the rubber latex constituting the pressure-sensitive adhesive composition. In the present invention, the rubber latex is a natural rubber latex denatured by copolymerizing a natural rubber latex with an alkyl methacrylate ester.

The rubber latex used in the present invention preferably has a glass transition temperature (Tg) of 5°C or lower. In the embodiment of the present invention, the glass transition temperature of the rubber latex is 5°C or lower and preferably 0°C or lower. When the above-described rubber latex is used, pressure-sensitive adhesive compositions that can be used in a wide temperature range can be obtained.

The rubber latex used in the present invention includes fine rubber particles having a particle diameter in a range of 0.02 µm to 2 µm. In the embodiment of the present invention, the particle diameters of the fine rubber particles in the rubber latex are in a range of 0.02 µm to 2 µm and preferably in a range of 0.2 µm to 2 µm. When the above-described rubber latex is used, pressure-sensitive adhesive compositions having excellent storage stability can be obtained.

The above-described methacrylic acid ester-natural rubber copolymer is manufactured by graft-copolymerizing natural rubber and a methacrylic acid ester. As the methacrylic acid ester, an alkyl ester is used and an alkyl ester having 1 to 4 carbon atoms is preferably used. Particularly, methyl methacrylate having one carbon atom is preferred in terms of easy procurement and the stability of the obtained copolymer in water.

The water-soluble styrene-acrylic acid copolymer used in the pressure-sensitive adhesive of the present invention is manufactured by copolymerizing styrene and acrylic acid and then neutralizing a carboxylate residue using at least one selected from ammonia, amine compounds, and alkali metal hydroxides.

In addition, the water-soluble styrene-acrylic acid copolymer preferably has a number-average molecular weight in a range of 1000 to 30000, a solid content acid value in a range of 50 to 300, and a glass transition temperature in a range of 50°C to 150°C and more preferably has a number-average molecular weight in a range of 5000 to 20000, a solid content acid value in a range of 200 to 300, and a glass transition temperature in a range of 80°C to 150°C. Here, the number-average molecular weight is a value measured using a GPC method (in terms of polystyrene).

The content ratio between the methacrylic acid ester-natural rubber copolymer and the water-soluble styrene-acrylic acid copolymer is preferably in a range of 1:2 to 4:1 and more preferably in a range of 2:3 to 3:1 in terms of the solid content ratio. In this range, it is possible to ensure adhesiveness and re-detachment strength that are suitable for pressure-sensitive adhesives used for information-carrying sheets.

In addition to the rubber latex and the water-soluble styrene-acrylic acid copolymer, other rubber latexes and resins can be optionally used.

The pressure-sensitive adhesive composition of the present invention preferably includes fine silica particles. When fine silica particles are used, it is possible to obtain pressure-sensitive adhesive compositions having excellent writability properties so that writing becomes possible on a pressure-sensitive adhesive-coated surface obtained by applying and drying the pressure-sensitive adhesive composition on a substance to be coated such as paper in a case in which writing is performed on the coated surface with a writing tool such as a pencil or a ballpoint pen.

Examples of the fine silica particles include silica particles having a primary particle diameter at a nanometer level, fumed silica having a particle shape adjusted to a range of approximately 1 µm to 15 µm (using a laser method), precipitated silica, and colloidal silica. Among them, colloidal silica is preferred.

The pressure-sensitive adhesive composition of the present invention includes a wax. When a wax is used, it is possible to provide favorable abrasion resistance to pressure-sensitive adhesives obtained by applying and drying the pressure-sensitive adhesive composition.

Examples of the wax include paraffin waxes, microcrystalline waxes, montan waxes, Fischer-Tropsch waxes, polyethylene waxes, polypropylene waxes, carnauba waxes, denatured waxes, and the like. Among them, an aqueous dispersion of a polyethylene wax having an average particle diameter in a range of 0.5 µm to 10 µm (measured using the Coulter counter method) is preferred.

The pressure-sensitive adhesive composition of the present invention preferably includes potassium hydroxide. When potassium hydroxide is used, the pH of the pressure-sensitive adhesive composition is preferably maintained in a range of 7 to 10 and more preferably maintained at 8 or 9. Therefore, it is possible to prevent the agglomeration of the pressure-sensitive adhesive composition caused when the pressure-sensitive adhesive composition is applied to a substance to be coated such as paper and the stability of the composition can be maintained.

The pressure-sensitive adhesive composition of the present invention preferably has a thixotropic index in a range of 1.0 to 3.0 and more preferably has a thixotropic index in a range of 1.0 to 2.0. The pressure-sensitive adhesive composition having the above-described thixotropy is preferred since the storage stability thereof is maintained for a long period of time. The thixotropic index is measured in the following manner. A BM-type viscometer is used, the reading is read when the composition is rotated at a high rotation rate for 3 minutes, then, the composition is left to stand for 5 minutes, and then the reading is read when the composition is rotated at a low rotation rate for 3 minutes. The thixotropy is expressed by a value obtained by dividing the reading at the low rotation rate by the reading at the high rotation rate.

To the pressure-sensitive adhesive composition of the present invention, in addition to the above-described components, other additives may be added as necessary and examples thereof include other rubber latexes, a stabilizer, a defoamer, an antifungal agent, and a thickening agent.

The pressure-sensitive adhesive composition of the present invention can be prepared by mixing the rubber latex and the water-soluble styrene-acrylic acid copolymer, adding the additives as necessary, and adding water as needed so as to adjust the viscosity to be suitable for printing or coating. The viscosity of the pressure-sensitive adhesive composition is preferably in a range of 15 seconds to 25 seconds (Zahn Cup #4).

When the pressure-sensitive adhesive composition of the present invention is applied to paper that serves as a base material, a printing machine such as a gravure printer or a flexo printer or a roll coater is used and, in a case in which the composition is applied using a printing machine, plate clogging does not easily occur.

In a case in which the above-described pressure-sensitive adhesive composition of the present invention is printed on paper that serves as a base material, the printing rate can be set in a range of 30 m/minute to 80 m/minute and is preferably set in a range of 30 m/minute to 50 m/minute.

The pressure-sensitive adhesive composition of the present invention is applied onto a base material and is dried at a temperature in a range of, for example, 80°C to 100°C, and a layer of the pressure-sensitive adhesive on the base material is laminated on a sheet or the like. The pressure-sensitive adhesive of the present invention is capable of forming a layer having an excellent strength by the interaction between the fine rubber particles and the water-soluble styrene-acrylic acid copolymer.

The pressure-sensitive adhesive composition of the present invention is applied to a first sheet surface and a second sheet surface after printing and is dried. After that, the first sheet surface and the second sheet surface are press-bonded together so that the first sheet surface and the second sheet surface are closely adhered together. Sheets in which the first sheet surface and the second sheet surface are closely adhered together can be made to be easily re-detachable at a desired point in time or not re-detachable by changing the components and composition ratios of the pressure-sensitive adhesive composition or press-bonding conditions.

The detachment strength can be measured using the following method.

First, the pressure-sensitive adhesive composition of the present invention is applied to the printed surfaces of two pieces of high-quality paper so as to reach 10 g/m², is dried at 80°C in an oven for 1 minute, and is cooled. The pressure-sensitive adhesive-coated surfaces of the two pieces of high-quality paper are press-bonded together at a pressure of 120 g/cm². The detachment strength of a sheet obtained in the above-described manner is measured using a TENSILON RTE-1210 (manufactured by Orientec Co., Ltd.).

An information-carrying sheet including the pressure-sensitive adhesive of the present invention applied onto a superposition surface thereof has a detachment strength in a range of 50 g/50 mm to 200 g/50 mm and preferably in a range of 100 g/50 mm to 150 g/50 mm.

In addition, the pressure-sensitive adhesive of the present invention is designed to have a re-detachment strength that abruptly increases when the adhesion pressure exceeds 100 kg/cm² and thus the pressure-sensitive adhesive can be easily peeled off with a finger force when adhered at less than 100 kg/cm². Once peeled off, the pressure-sensitive adhesive cannot be adhered again until the pressure exceeds 100 kg/cm².

An information-carrying sheet of the present invention can be adhered in two-fold, three-fold, cut-and-overlap, and other superposition forms and can be preferably used for postcards having a double-page spread, a variety of ledger sheets, notice letters, a variety of cards, advertising catalogues, newspapers, and labels.

### Examples

Hereinafter, the present invention will be described in more detail using examples but the present invention is not limited to these examples. Meanwhile, in the examples, "parts" indicate "parts by weight" and "%" indicates "% by weight".

Pressure-sensitive adhesive compositions of Examples 1 to 15 and Comparative Examples 1 and 2 were prepared using materials described in Table 1 according to the formulations (parts) in Table 2. Only examples 1, 4-12 and 13 are examples according to the present invention, examples 2-3 and 14-15 are not.

**[Table 1]**

| Materials used | | Product name and product information | Content (wt%) | Manufacturer |
|---|---|---|---|---|
| Rubber latex | Methacrylic acid ester-natural rubber copolymer | CORETEX MG15 | 48 | Tokyo Zairyo Co., Ltd. |
| | | CORETEX MG25 | 50 | |
| | | CORETEX MG40 | 50 | |
| | Acrylate-based latex | LX874 | 45 | Zeon Corporation |
| | | SX1706 | 40 | |
| Water-soluble styrene-acrylic acid copolymer | | JONCRYL HPD96J | 34 | BASF Japan Ltd. |
| | | JONCRYL 60J | 34 | |
| Styrene-acrylic acid ester emulsion | | JONCRYL 7610 | 52 | |
| | | JONCRYL PDX-7341 | 49 | |
| Silica particles | | SYLYSIA 350 Average particle diameter: 1.8 µm | 100 | Fuji Silysia Chemical Ltd. |
| Cornstarch | | Cornstarch 1 | 100 | Japan Corn Starch Co., Ltd. |
| Polyvinyl chloride resin particles | | AD150 Particle diameter: 4 µm to 10 µm | 100 | Tosoh Corporation |
| Polyethylene wax | | CHEMIPEARL W200 40% Aqueous dispersion Softening point: 113°C Average particle diameter: 6 µm | 40 | Mitsui Chemicals, Inc. |
| Potassium hydroxide | | 10% Aqueous solution | - | - |
| Defoamer | | 013A, Silicone-based, Non-ionic, 56 wt% Aqueous solution | - | The Dow Chemical Company |

The properties of the above-described methacrylic acid ester-natural rubber copolymer and the above-described acrylate-based latex which were used as rubber latexes were as described below.
(i) Methacrylic acid ester-natural rubber copolymer (manufactured by Tokyo Zairyo Co., Ltd., CORETEX MG15)
   Number-average molecular weight: 20000
   Glass transition temperature (Tg): 0°C
   Particle diameter: 0.02 µm to 2 µm
   PH: 10
   Aqueous solution having a concentration of 48 wt%
(ii) Methacrylic acid ester-natural rubber copolymer (manufactured by Tokyo Zairyo Co., Ltd., CORETEX MG25)
   Number-average molecular weight: 20000
   Glass transition temperature (Tg): 0°C
   Particle diameter: 0.02 µm to 2 µm
   PH: 10
   Aqueous solution having a concentration of 50 wt%
(iii) Methacrylic acid ester-natural rubber copolymer (manufactured by Tokyo Zairyo Co., Ltd., CORETEX MG40)
   Number-average molecular weight: 20000
   Glass transition temperature (Tg): 0°C
   Particle diameter: 0.02 µm to 2 µm
   PH: 10
   Aqueous solution having a concentration of 50 wt%
(iv) Acrylate-based latex (manufactured by Zeon Corporation, LX874)
   Glass transition temperature (Tg): -31°C
   PH: 6.5
   Aqueous solution having a concentration of 45 wt%
(v) Acrylate-based latex (manufactured by Zeon Corporation, SX1706)
   Glass transition temperature (Tg): 0°C
   PH: 7.4
   Aqueous solution having a concentration of 48 wt%

The properties of the water-soluble styrene-acrylic acid copolymer used were as described below.
(i) Water-soluble styrene-acrylic acid copolymer (manufactured by BASF Japan Ltd., JONCRYL HPD96J)
   Number-average molecular weight: 16500
   Glass transition temperature (Tg): 102°C
   Solid content acid value: 240
   Aqueous solution having a concentration of 34 wt%
(ii) Water-soluble styrene-acrylic acid copolymer (manufactured by BASF Japan Ltd., JONCRYL 60J)
   Number-average molecular weight: 8500
   Glass transition temperature (Tg): 85°C
   PH: 8.4
   Solid content acid value: 215
   Aqueous solution having a concentration of 34 wt%

The properties of the styrene-acrylic acid ester emulsion used were as described below.
(i) Styrene-acrylic acid ester emulsion (manufactured by BASF Japan Ltd., JONCRYL 7610)
   Number-average molecular weight: 20000 or more
   Glass transition temperature (Tg): 96°C
   PH: 8.3
   Solid content acid value: 50
   Emulsion having a concentration of 52 wt%
(ii) Styrene-acrylic acid ester emulsion (manufactured by BASF Japan Ltd., JONCRYL PDX-7341)
   Number-average molecular weight: 20000 or more
   Glass transition temperature (Tg): 15°C
   Solid content acid value: 51
   Emulsion having a concentration of 49 wt%

The average particle diameters of the silica particles and the particle diameters of the polyvinyl chloride resin particles are both values measured using a laser method. The average particle diameters of the polyethylene wax are values measured using the Coulter counter method.

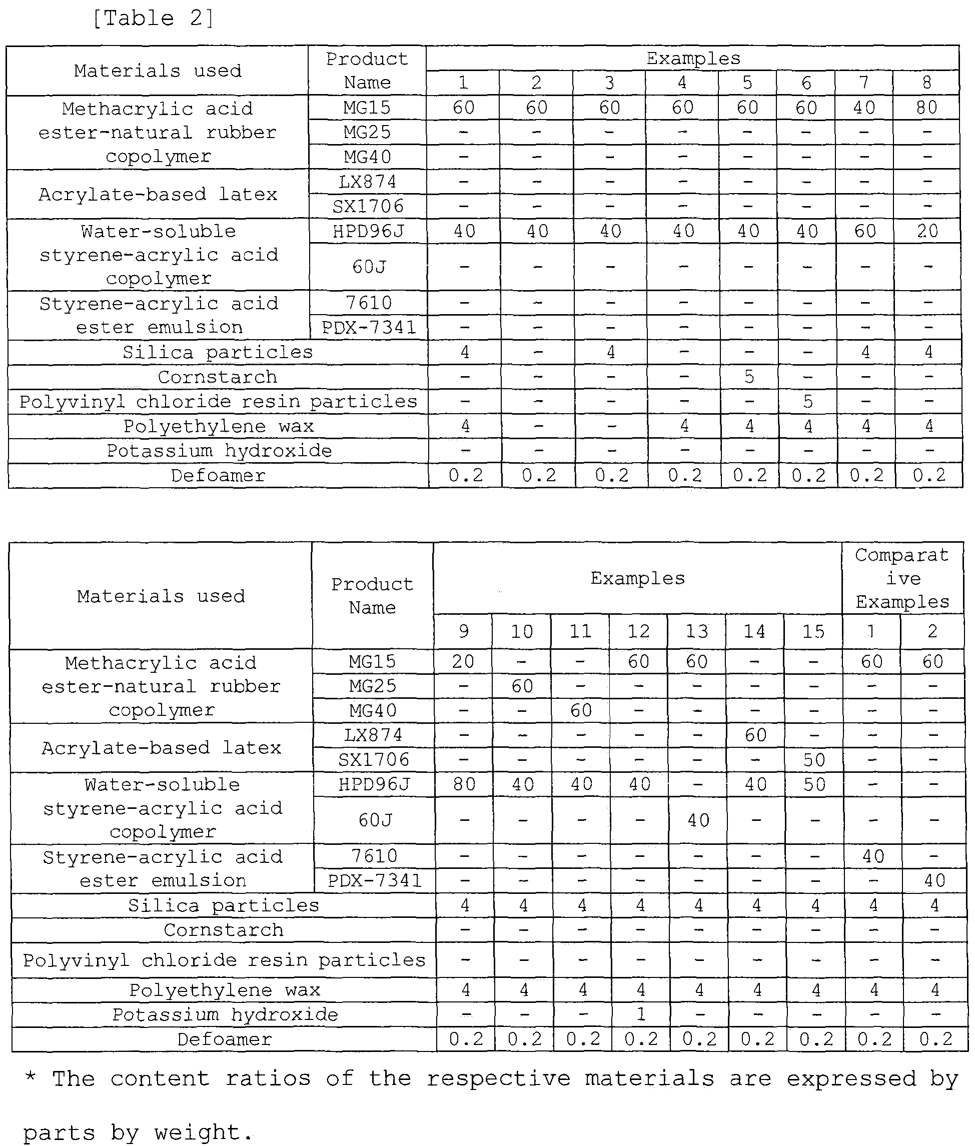

Pressure-sensitive adhesives in Table 2 were evaluated using the following test methods and the results are described in Table 3.

### (1) Stability

The pressure-sensitive adhesives were stored at 50°C for two weeks and pressure-sensitive adhesives in which separation, settlement, and thickening did not occur were evaluated to be O, pressure-sensitive adhesives in which separation and settlement occurred but the adhesives returned to the original state when stirred were evaluated to be Δ, and pressure-sensitive adhesives in which separation and settlement occurred and the adhesives did not return to the original state even when stirred or thickening and gelation occurred were evaluated to be X.

### (2) Re-solubility (plate clogging)

The pressure-sensitive adhesives were applied to aluminum foil and were dried using a dryer, and then the aluminum foil was immersed in water. Pressure-sensitive adhesives that were completely dissolved were evaluated to be ○, pressure-sensitive adhesives that were partially dissolved were evaluated to be Δ, and pressure-sensitive adhesives that were not dissolved at all were evaluated to be X.

In this test, the pressure-sensitive adhesives that were not dissolved were likely to remain on plates during printing and application and thus were likely to cause plate clogging.

### (3) Blocking resistance

The pressure-sensitive adhesive was applied to the printed surface of high-quality paper on which generally-used patterns, frames for writing personal information, information items and descriptions, and the like were printed on one surface so as to reach 10 g/m², was dried at 80°C in an oven for 1 minute, and was cooled, and then a pressure-sensitive adhesive-coated surface of high-quality paper onto which the adhesive was applied in the same manner was superposed thereon, and a pressure of 500 g/cm² was applied. Next, the two pieces of paper were peeled off from each other by hands, and, in a case in which the pieces of paper were easily peeled off from each other, adhesives were evaluated to be ○, in a case in which, while a slight force was required, the materials could be detached from each other with no breakage, adhesives were evaluated to be Δ, and, in a case in which a force was required for detachment and breakage of the materials occurred, adhesives were evaluated to be X.

### (4) Re-detachability

Two pieces of the high-quality paper coated with the adhesive in (3) were closely adhered to each other at a pressure of 120 kg/cm² with the adhesive-coated surfaces thereof facing each other. The detachment strength of the obtained closely-adhered sample was measured using a TENSILON RTE-1210 (manufactured by Orientec Co., Ltd.) and, in a case in which the materials were not broken and the re-detachment strength was in a range of 50 g/50 mm to 200 g/50 mm, adhesives were evaluated to be ○, in a case in which the materials were not broken and the re-detachment strength was less than 50 g/50 mm, adhesives were evaluated to be Δ, and, in a case in which the materials were not broken and the re-detachment strength was 200 g/50 mm or higher or the materials were broken, adhesives were evaluated to be X. Meanwhile, regarding the test conditions, the temperature was set to 20°C, the crosshead speed during the measurement of the detachment strength was set to 300 mm/min, and T-type detachment was used.

### (5) Transparency

The samples having the printed surface coated with the adhesive which were used in the blocking resistance test of (3) were compared with blanks to which the adhesives were not applied and the clarities of the printed patterns and letters were evaluated. In a case in which there was no problem with the reading of the letters of the samples and the letters of the samples appeared almost the same as that of the blanks, adhesives were evaluated to be ○ and, in a case in which the opacity became more intense and the letters of the samples appeared blurry, adhesives were evaluated to be Δ.

### (6) Abrasion resistance

For high-quality paper prepared in the same manner as the high-quality paper used for the evaluation of the blocking resistance of (3), the abrasion resistance was evaluated at a load of 200 g according to JIS-P8136 using a Gakushin-type rubbing tester (Rubbing Color Fastness Tester FR-2, manufactured by Suga Test Instruments Co., Ltd.). Regarding the evaluation results, in a case in which shavings are not formed even after the paper was rubbed 50 times, adhesives were evaluated to be ○, in a case in which shavings are formed after the paper was rubbed 25 to 49 times, adhesives were evaluated to be Δ, and, in a case in which shavings are formed after the paper was rubbed 24 or less times, adhesives were evaluated to be X.

### (7) Tackiness

The tackiness of the adhesive-coated surface of the high-quality paper whose re-detachability had been evaluated in (2) was evaluated using the feeling of the fingertip. Regarding the evaluation results, in a case in which the finger could smoothly move, adhesives were evaluated to be ○, in a case in which the movement of the finger was hindered and the finger could not smoothly move, adhesives were evaluated to be Δ, and, in a case in which the movement of the finger was stopped, adhesives were evaluated to be X.

### (8) Writability properties

In a case in which writing was possible with any of a marker pen, a ballpoint pen, and a pencil, adhesives were evaluated to be ○, in a case in which writing was possible with any of a marker pen, a ballpoint pen, and a pencil but letters were removed or faded when rubbed, adhesives were evaluated to be Δ, and, in a case in which writing was not possible with any or all of a marker pen, a ballpoint pen, and a pencil, adhesives were evaluated to be X.

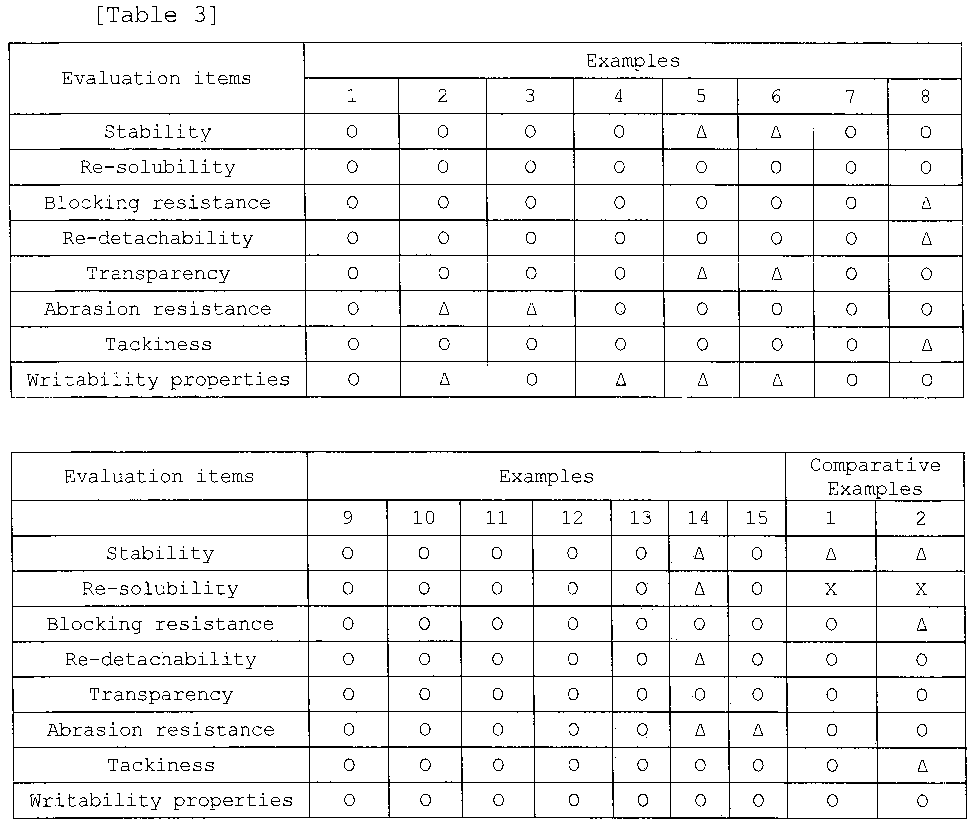

According to Table 3, in the pressure-sensitive adhesives of Comparative Examples 1 and 2 in which the styrene-acrylic acid ester emulsion was used, particularly, the re-solubility was poor and thus plate clogging easily occurred and the stability was poor.

The pressure-sensitive adhesives of Examples 1 to 15 did not have any problem when used as re-detachable adhesives. From the above-described evaluations, it was found that, in a case in which the polyethylene wax was not used (Examples 2 and 3), the abrasion resistance was poor, in a case in which the silica particles were not used (Examples 2, 4, 5, and 6), the writability properties were poor, and, in a case in which particles other than the silica particles such as the cornstarch and the polyvinyl chloride resin particles were used (Examples 5 and 6), the stability, transparency, and writability properties were poor.

Priorities are claimed on Japanese Patent Application No. 2012-275200, filed on December 18, 2012, and Japanese Patent Application No. 2012-275201, filed on December 18, 2012.

## Claims

1. A pressure-sensitive adhesive composition for forming a re-detachable sheet by being applied to a first sheet surface and a second sheet surface after printing, being dried, and then press-bonding the first sheet surface and the second sheet surface together so as to closely adhere the first sheet surface and the second sheet surface, comprising:
a rubber latex;
a water-soluble styrene-acrylic acid copolymer; and
a wax,
wherein the rubber latex includes a methacrylic acid ester-natural rubber copolymer.

2. The pressure-sensitive adhesive composition according to Claim 1,
wherein the rubber latex has a glass transition temperature (Tg) of 5°C or lower.

3. The pressure-sensitive adhesive composition according to Claim 1 or 2,
wherein the rubber latex includes fine rubber particles having a particle diameter in a range of 0.02 µm to 2 µm.

4. The pressure-sensitive adhesive composition according to any one of Claims 1 to 3,
wherein the water-soluble styrene-acrylic acid copolymer is a salt of at least one selected from ammonia, amine compounds, and alkali metals.

5. The pressure-sensitive adhesive composition according to any one of Claims 1 to 4, further comprising:
fine silica particles.

6. The pressure-sensitive adhesive composition according to Claim 5,
wherein the fine silica particles are colloidal silica.

7. The pressure-sensitive adhesive composition according to any one of Claims 1 to 6,
wherein the wax is a polyethylene wax.

8. The pressure-sensitive adhesive composition according to any one of Claims 1 to 7, further comprising:
potassium hydroxide.

9. The pressure-sensitive adhesive composition according to any one of Claims 1 to 8,
wherein the pressure-sensitive adhesive composition has a thixotropic index in a range of 1.0 to 3.0.

10. A pressure-sensitive adhesive for forming a re-detachable sheet by being applied to a first sheet surface and a second sheet surface after printing and press-bonding the first sheet surface and the second sheet surface together so as to closely adhere the first sheet surface and the second sheet surface, comprising:
fine rubber particles;
a water-soluble styrene-acrylic acid copolymer; and
a wax,
wherein the fine rubber particles include a methacrylic acid ester-natural rubber copolymer.

11. An information-carrying sheet,
wherein the pressure-sensitive adhesive according to Claim 10 is applied to a superposition surface of paper that serves as a base material.

12. The information-carrying sheet according to Claim 11, wherein a detachment strength of the superposition surface of the paper is in a range of 50 g/50 mm to 200 g/50 mm.

## Patentansprüche

1. Haftkleber-Zusammensetzung zum Ausbilden eines wieder lösbaren Blattes dadurch, dass sie auf eine erste Blattoberfläche und eine zweite Blattoberfläche nach einem Drucken aufgebracht wird, getrocknet wird und dann die erste Blattoberfläche und die zweite Blattoberfläche zusammen derart pressverfügt werden, damit die erste Blattoberfläche und die zweite Blattoberfläche eng anhaften, umfassend:
einen Kautschuklatex,
ein wasserlösliches Styrol-Acrylsäure-Copolymer und
ein Wachs,
wobei der Kautschuklatex ein Methacrylsäureester-Naturgummi-Copolymer beinhaltet.

2. Haftkleber-Zusammensetzung gemäß Anspruch 1,
wobei der Kautschuklatex eine Glasübergangstemperatur (Tg) von 5°C oder weniger aufweist.

3. Haftkleber-Zusammensetzung gemäß Anspruch 1 oder 2,
wobei der Kautschuklatex feine Gummipartikel mit einem Partikeldurchmesser in einem Bereich von 0,02 µm bis 2 µm beinhaltet.

4. Haftkleber-Zusammensetzung gemäß einem jeglichen der Ansprüche 1 bis 3,
wobei das wasserlösliche Styrol-Acrylsäure-Copolymer ein Salz aus mindestens einem, ausgewählt aus Ammoniak, Aminverbindungen und Alkalimetallen, ist.

5. Haftkleber-Zusammensetzung gemäß einem jeglichen der Ansprüche 1 bis 4, die ferner umfasst:
feine Silicapartikel.

6. Haftkleber-Zusammensetzung gemäß Anspruch 5,
wobei die feinen Silicapartikel kolloidale Silica sind.

7. Haftkleber-Zusammensetzung gemäß einem jeglichen der Ansprüche 1 bis 6,
wobei das Wachs ein Polyethylenwachs ist.

8. Haftkleber-Zusammensetzung gemäß einem jeglichen der Ansprüche 1 bis 7, die ferner umfasst:
Kaliumhydroxid.

9. Haftkleber-Zusammensetzung gemäß einem jeglichen der Ansprüche 1 bis 8,
wobei die Haftkleber-Zusammensetzung einen Thixotropie-Index in einem Bereich von 1,0 bis 3,0 aufweist.

10. Haftkleber zum Ausbilden eines wieder lösbaren Blattes dadurch, dass er auf eine erste Blattoberfläche und eine zweite Blattoberfläche nach einem Drucken aufgebracht wird und die erste Blattoberfläche und die zweite Blattoberfläche zusammen derart pressverfügt werden, damit die erste Blattoberfläche und die zweite Blattoberfläche eng anhaften, umfassend:
feine Gummipartikel,
ein wasserlösliches Styrol-Acrylsäure-Copolymer und
ein Wachs,
wobei die feinen Gummipartikel ein Methacrylsäureester-Naturgummi-Copolymer beinhalten.

11. Informationstragendes Blatt,
wobei der Haftkleber gemäß Anspruch 10 auf eine Superpositionsoberfläche eines Papiers aufgetragen ist, das als ein Basismaterial dient.

12. Informationstragendes Blatt gemäß Anspruch 11,
wobei eine Ablösekraft der Superpositionsoberfläche des Papiers in einem Bereich von 50 g/50 mm bis 200 g/50 mm liegt.

## Revendications

1. Composition d'agent adhésif autocollant pour former une feuille re-détachable en étant réappliquée sur une première surface de feuille et une deuxième surface de feuille après impression, en étant séchée, et ensuite par collage sous pression de la première surface de feuille et de la deuxième surface de feuille ensemble de façon que la première surface de feuille et la deuxième surface de feuille adhèrent étroitement, comprenant :
un caoutchouc de latex ;
un copolymère de styrène-acide acrylique soluble dans l'eau ; et
une cire,
dans laquelle le caoutchouc de latex comprend un copolymère d'ester d'acide méthacrylique-caoutchouc naturel.

2. Composition d'agent adhésif autocollant selon la revendication 1, dans laquelle le caoutchouc de latex a une température de transition vitreuse (Tg) de 5°C ou moins.

3. Composition d'agent adhésif autocollant selon la revendication 1 ou 2, dans laquelle le caoutchouc de latex contient de fines particules de caoutchouc ayant une granulométrie située dans la plage allant de 0,02 µm à 2 µm.

4. Composition d'agent adhésif autocollant selon l'une quelconque des revendications 1 à 3, dans laquelle le copolymère de styrène-acrylique acide soluble dans l'eau est un sel d'au moins l'un choisi parmi l'ammoniac, les composés amines, et les métaux alcalins.

5. Composition d'agent adhésif autocollant selon l'une quelconque des revendications 1 à 4, comprenant en outre de fines particules de silice.

6. Composition d'agent adhésif autocollant selon la revendication 5, dans laquelle les fines particules de silice sont constituées de silice colloïdale.

7. Composition d'agent adhésif autocollant selon l'une quelconque des revendications 1 à 6, dans laquelle la cire est une cire de polyéthylène.

8. Composition d'agent adhésif autocollant selon l'une quelconque des revendications 1 à 7, comprenant en outre de l'hydroxyde de potassium.

9. Composition d'agent adhésif autocollant selon l'une quelconque des revendications 1 à 8, laquelle composition d'agent adhésif autocollant a un indice thixotropique situé dans la plage allant de 1,0 à 3,0.

10. Agent adhésif autocollant pour former une feuille re-détachable en étant réappliqué sur une première surface de feuille et une deuxième surface de feuille après impression et collage sous pression de la première surface de feuille et de la deuxième surface de feuille ensemble de façon que la première surface de feuille et la deuxième surface de feuille adhèrent étroitement, comprenant :
de fines particules de caoutchouc ;
un copolymère de styrène-acide acrylique soluble dans l'eau ; et
une cire,
dans lequel les fines particules de caoutchouc comprennent un copolymère d'ester d'acide méthacrylique-caoutchouc naturel.

11. Feuille portant des informations, dans laquelle l'agent adhésif autocollant selon la revendication 10 est appliqué à une surface de superposition en papier qui sert de matériau de base.

12. Feuille portant des informations selon la revendication 11, dans laquelle la force de détachage de la surface de superposition du papier est située dans la plage allant de 50 g/50 mm à 200 g/50 mm.
